## Europäisches Patentamt
## European Patent Office
## Office européen des brevets

(19)

(11) Veröffentlichungsnummer: **0 207 275 B1**

(12) **EUROPÄISCHE PATENTSCHRIFT**

(45) Veröffentlichungstag der Patentschrift:
23.08.89

(21) Anmeldenummer: 86106895.5

(22) Anmeldetag: 21.05.86

(51) Int. Cl.⁴: **B60T 13/68**
// B60T8/18

(54) Hilfs- und Feststellbremse für Nutzfahrzeuge.

(30) Priorität: 14.06.85 DE 3521486

(43) Veröffentlichungstag der Anmeldung:
07.01.87 Patentblatt 87/2

(45) Bekanntmachung des Hinweises auf die Patenterteilung:
23.08.89 Patentblatt 89/34

(84) Benannte Vertragsstaaten:
DE FR GB IT NL SE

(56) Entgegenhaltungen:
EP-A- 0 014 369
DE-A- 2 508 409
DE-A- 3 149 110
DE-C- 2 811 345
FR-A- 2 293 736
US-A- 3 402 972
US-A- 3 807 810

(73) Patentinhaber: KNORR-BREMSE AG, Moosacher Strasse 80 Postfach 401060, D-8000 München 40(DE)

(72) Erfinder: Berisch, Volker, Schönbichlstrasse 45, D-8036 Herrsching(DE)
Erfinder: Broch, Walter, Hauptstrasse 15, D-8061 Wiedenzhausen(DE)
Erfinder: Kessel, Gerd, Dr., Lechweg 15, D-8037 Olching(DE)
Erfinder: Mrosek, Helmut, Christoph-von-Gluck-Platz 14, D-8000 München 40(DE)
Erfinder: Straub, Laszlo, Max-Löw-Strasse 12, D-8014 Neubiberg(DE)
Erfinder: Tischler, Karl-Heinz, Hildeboldstrasse 28, D-8000 München 40(DE)
Erfinder: Vollmer, Otto, Joergstrasse 31, D-8000 München 21(DE)

ACTORUM AG

**Beschreibung**

Die Erfindung bezieht sich auf eine Hilfs- und Feststellbremse für Nutzfahrzeuge gemäß dem Oberbegriff des Patentanspruches.

Bei elektro-pneumatischen Bremsen erfolgte bisher die Signalerzeugung sowohl elektrisch als auch pneumatisch, wobei die elektrischen Ansteuersignale den Vorrang hatten und die pneumatischen Ansteuersignale nur bei Ausfall der elektrischen Signale zum Einsatz kamen. Die Pneumatik wurde sozusagen als Sicherheits- oder Rückfallebene verwendet.

Die Entwicklungseinrichtung heutiger elektropneumatischer Bremsen geht dahin, die gesamte Signalerzeugung rein elektrisch bzw. elektronisch zu gestalten, was verschiedene Vorteile bringt, jedoch auch erhöhte Sicherheitsanforderungen, da die Ausfallhäufigkeit elektrischer bzw. elektronischer Bauteile unter den erschwerten Einsatzbedingungen bei Fahrzeugen höher ist als die rein mechanischer Bauteile.

Die DE-A 3 149 110 zeigt in Fig. 2 eine derartige elektropneumatische Bremse in Kombination mit einer Hilfs- und Feststellbremse gemäß den eingangs genannten Merkmalen. Bei dieser bekannten Bremse ist eine zweikreisige Spannungsversorgung für zwei Bremskreise mit je einem Elektronik-Schaltkreis und einem EP-Wandler zum Steuern der Druckluftbeaufschlagung von Bremszylindern vorgesehen; die beiden Elektronik-Schaltkreise sind mittels eines zweikreisigen, rein elektrischen Fußbremsventils ansteuerbar. Mit den beiden Elektronik-Schaltkreisen ist ein dritter Elektronik-Schaltkreis für die Hilfs- und Feststellbremse kombiniert, der über zwei Magnetspulen eines dritten EP-Wandlers die Druckluftbeaufschlagung von Federspeicherbremszylindern steuert. Dieser dritte Elektronik-Schaltkreis ist von einem rein elektrischen Handbremsventil ansteuerbar. Die Stromversorgung der elektrischen Organe der Hilfs- und Feststellbremse ist nicht offenbart, doch ist naheliegend, daß diese aus einem oder beiden Kreisen der erwähnten, zweikreisigen Spannungsversorgung erfolgt.

Es sind elektro-pneumatische Wandler bekannt, die aus einem elektrischen Ansteuersignal einen pneumatischen Druckwert erzeugen (vgl. DE-A 2 811 345, FR-A 2 293 736, US-A 3 402 972, EP-A 0 014 369, DE-A 2 508 409 und US-A 3 807 810). Derartige Wandler werden allgemein als "EP-Wandler" bezeichnet.

Für eine Hilfs- und Feststellbremse für Nutzfahrzeuge ergeben sich folgende Forderungen:

– Es darf nicht ungewollt eingebremst werden; und

– die Feststellbremse muß ausfallsicher sein, d.h. sie muß sicher halten und darf nicht ungewollt lösen.

Beide Bedingungen müssen auch dann erfüllt sein, wenn elektronische Bauteile ausfallen.

Aufgabe der Erfindung ist es daher, die Hilfs- und Feststellbremse der eingangs genannten Art dahingehend auszubilden, daß sie bei rein elektronischer Signalerzeugung weitestgehend ausfallsicher ist, d.h. weder ungewollt einbremst noch ungewollt löst, selbst wenn elektronische Bauteile ausgefallen sind.

Diese Aufgabe wird durch die im kennzeichnenden Teil des Patentanspruches angegebenen Merkmale gelöst. Unter Ruhezustand des Handbremshebels ist dabei diejenige Stellung zu verstehen, in welcher die Federspeicherbremse gelöst ist.

Der Grundgedanke der Erfindung liegt somit darin, eine sichere, unabhängige Stromversorgung für den EP-Wandler vorzusehen und diesen zwangsweise mit dieser unabhängigen Stromversorgung zu verbinden, solange die Hilfs- und Feststellbremse nicht im Einsatz ist. Weiterhin wird beim Einsatz der Feststellbremse der EP-Wandler zwangsweise von jeglicher elektrischer Energiezufuhr getrennt, so daß er rein mechanisch in den für die Feststellbremsung erforderlichen Zustand fällt.

Im Folgenden wird die Erfindung anhand eines Ausführungsbeispiels im Zusammenhang mit den Zeichnungen ausführlich erläutert :

Es zeigen:

Fig.1 ein Blockschaltbild einer Bremsanlage für Nutzfahrzeuge mit der Hilfs- und Feststellbremse nach der Erfindung;

Fig.2 ein Blockschaltbild der Hilfs- und Feststellbremse nach der Erfindung;

Fig.3A eine schematische Darstellung einer Handbrems-Betätigungseinrichtung, die bei der Erfindung verwendet wird;

Fig.3B und 3C verschiedene Ausgangssignale der Handbrems-Betätigungseinrichtung der Fig. 3A und

Fig.4 ein Blockschaltbild des bei der Erfindung verwendeten EP-Wandlers und Grundzüge dessen elektrischer Ansteuerung.

Gleiche Bezugszeichen in den einzelnen Figuren bezeichnen gleiche bzw. einander entsprechende Teile.

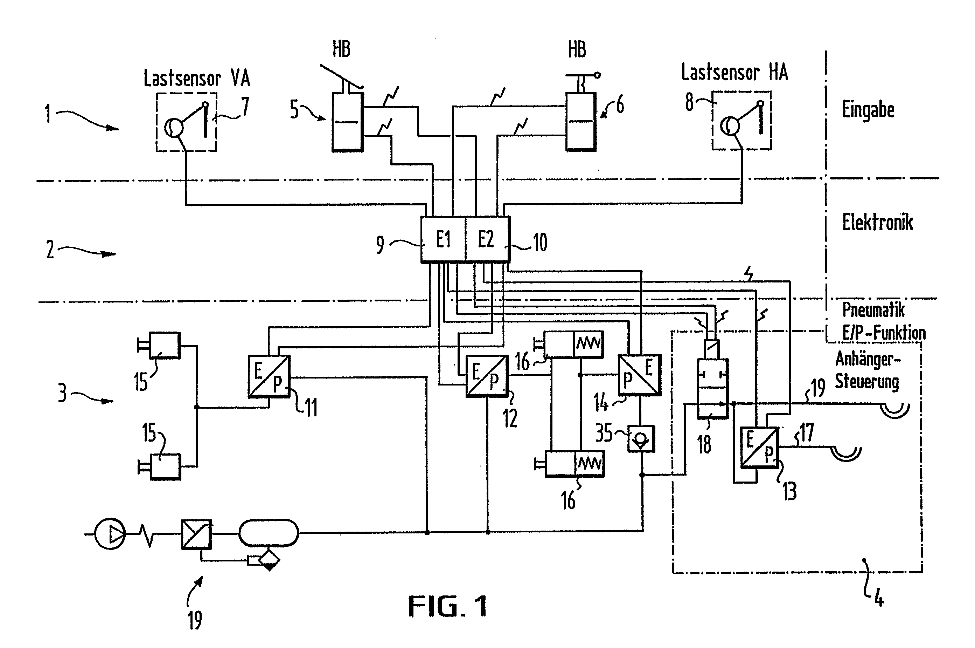

Fig.1 gibt eine Gesamtübersicht einer Bremsanlage, deren Teil die Hilfs- und Feststellbremse nach der Erfindung ist. Diese Bremsanlage kann man gedanklich in vier Abschnitte unterteilen, nämlich eine Eingabe 1, eine Elektronik 2, eine Pneumatik 3 und, als Bestandteil der Pneumatik 3, eine Anhängersteuerung 4.

Die Eingabe 1 enthält eine Fußbremsbetätigungseinrichtung, im weiteren Fußbrems-"Ventil" 5 genannt und wie üblich auch mit der Abkürzung "MB" bezeichnet, eine Handbremsbetätigungseinrichtung, weiterhin Handbrems-"Ventil" 6 genannt, welche das auch mit der Abkürzung "HB" bezeichnet wird, sowie einen Lastsensor 7 für die Vorderachse und einen Lastsensor 8 für die Hinterachse.

Obwohl Fuß- und Handbremsventil 5 und 6 keine mechanischen Ventile enthalten, sondern ausschließlich elektrische oder elektronische Signalerzeugungsorgane, soll hier gleichwohl in Anlehnung an die in der Bremstechnik gebräuchlichen Begriffe von "Ventilen" gesprochen werden.

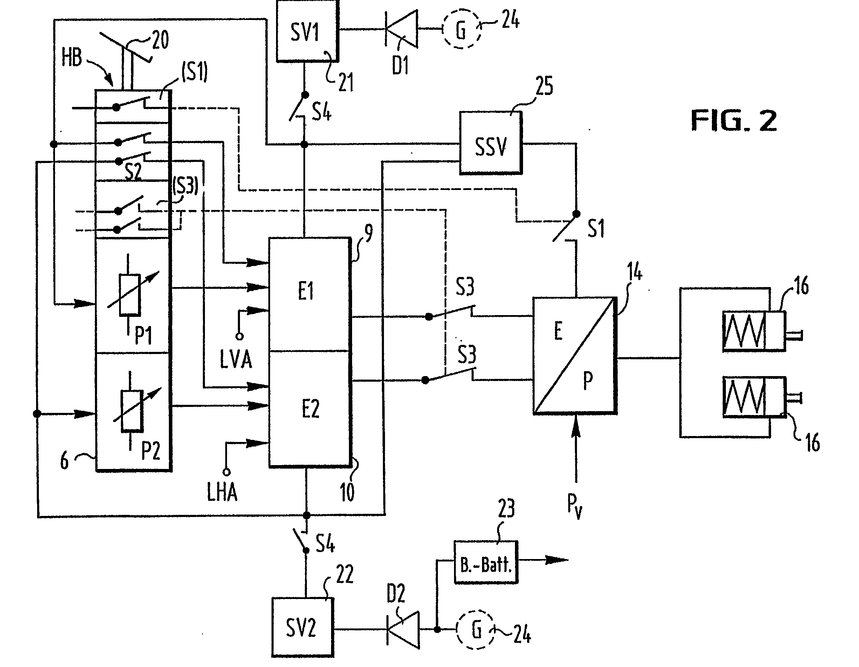

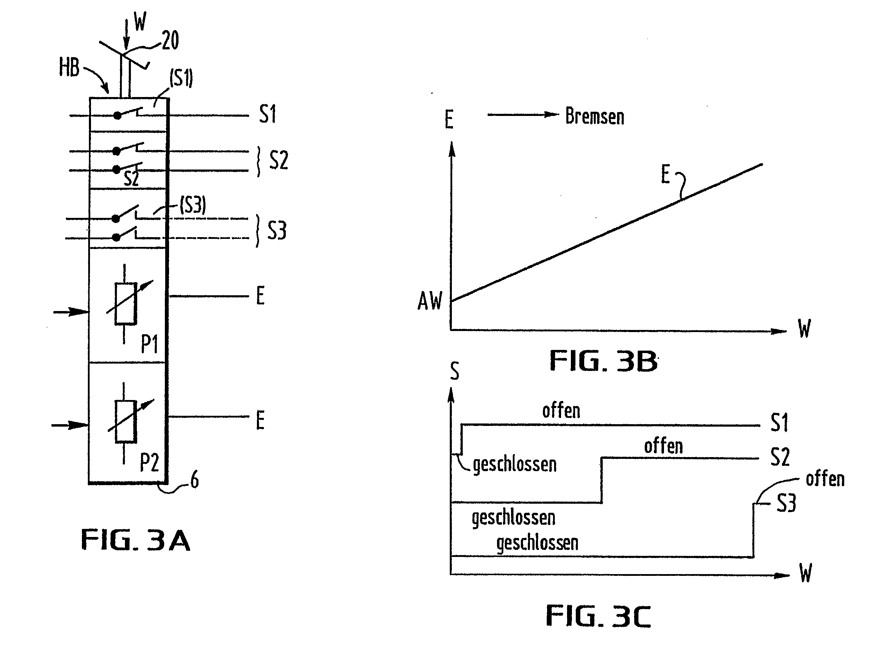

Die Bauteile nach den Bezugszahlen 5 bis 8 erzeugen also rein elektrische Signale, die über elektrische Leitungen der Elektronik 2 zugeführt werden. Bei den beiden "Ventilen" 5 und 6 sind diese Signale stellungsabhängig, d.h. sie ändern sich in Abhängigkeit von der Stellung des zugeordneten Fuß- oder Handbremshebels, wie detailliert im Zusammenhang mit Fig.2 und 3 erläutert wird. In diesem Zusammenhang sei auch darauf hingewiesen, daß der Begriff "Handbremshebel" letztlich das vom Fahrer betätigte Stellorgan bezeichnet, unabhängig davon, ob es von Hand oder mit dem Fuß betätigt wird.

Die Ausgangssignale der Bauteile 5 bis 8 werden in der Elektronik 2 zu Steuersignalen verarbeitet, um gewünschte Bremsfunktionen zu realisieren. Die Elektronik 2 enthält zwei voneinander getrennte Elektronik-Schaltkreise 9 und 10, die auch mit E1 und E2 bezeichnet sind; es ist aus Sicherheitsgründen also eine zweifache Anordnung vorgesehen. Beide Elektronikschaltkreise 9 und 10 erhalten die Ausgangssignale von Fuß- und Handbremsventil 5 und 6 und verarbeiten diese Signale unabhängig voneinander. Die Ausgangssignale der Lastsensoren 7 und 8 werden dagegen je nur einem Elektronik-Schaltkreis 9 bzw. 10 zugeführt. Hinsichtlich dieser Signale findet jedoch zwischen den beiden Elektronik-Schaltkreisen 9 und 10 ein Signalaustausch vor, so daß beide Elektronik-Schaltkreise 9 und 10 alle Eingangssignale der Eingabe 1 zur Verfügung haben.

Die Ausgangssignale der Elektronik-Schaltkreise 9 und 10 werden insgesamt 4 EP-Wandlern 11 bis 14 zugeführt, die aus elektrischen Ansteuersignalen entsprechende pneumatische Drücke erzeugen, die den einzelnen Bremszylindern zugeführt werden.

Die Ausgangssignale für die Betriebsbremse werden von den elektronischen Schaltkreisen 9 bzw. 10 je einem EP-Wandler 11 bzw. 12 zugeführt. Die EP-Wandler 11 und 12 steuern getrennt die Druckbeaufschlagung der ihnen zugeordneten Bremszylinder 15 für Vorderachse bzw. für den Betriebsbremsteil kombinierter Federspeicherbremszylinder 16 für die Hinterachse. Damit ist - bei üblicher Mehrkreisausbildung der in Fig. 1 nur einkreisig dargestellten Druckluftversorgung 19 - das Konzept einer zweikreisigen Betriebsbremsanlage erfüllt.

Der EP-Wandler 14 für die zusätzliche Hilfs- und Feststellbremse wird gemeinsam von beiden Elektronik-Schaltkreisen 9 und 10 angesteuert und versorgt die Federspeicherteile der Federspeicherbremszylinder 16 mit pneumatischem Druck.

Der EP-Wandler 13 für die Anhängerbremssteuerung 4 wird ebenfalls von beiden Elektronik-Schaltkreisen 9 und 10 angesteuert und erzeugt an seinem pneumatischen Ausgang 17 einen pneumatischen Ansteuerdruck, der als direkter Bremssteuerdruck zu einem evtl. vorhandenen Anhänger geleitet wird. Über ein ebenfalls von beiden Elektronik-Schaltkreisen 9 und 10 betätigbares Absperrventil 18 wird über eine Versorgungsleitung 19 auch der Versorgungsdruck als Vorratsdruck zum Anhänger gegeben. Die Druckeingänge der EP-Wandler 11,12,13 und 14 sind an eine herkömmliche Druckversorgung 19 angeschlossen, die in Fig.1 nur einkreisig dargestellt ist, wobei zwischen die Druckversorgung 19 und den EP-Wandler 3 noch das Absperrventil 18 zwischengeschaltet und dem EP-Wandler 14 ein Rückschlagventil 35 vorgeschaltet ist. Selbstverständlich kann die Druckluftversorgung mittels eines Mehrkreisschutzventils in üblicher Weise mehrkreisig aufgebaut werden, so daß die EP-Wandler 11,12,13 und gegebenenfalls 14 aus unterschiedlichen Kreisen druckluftversorgt werden.

Es wird nun auf die Hilfs- und Feststellbremse gemäß Fig.2 eingegangen. Das Handbremsventil 6 mit Handbremshebel 20 enthält ausschließlich elektrische bzw. elektronische Organe und zwar einen Zwangsversorgungsschalter S1, ein erstes Schalterpaar S2, ein zweites Schalterpaar S3 sowie zwei Potentiometer P1 und P2. Durch Betätigen des Handbremshebels 20 werden die Schalter S1 bis S3 bei bestimmten Stellungen des Handbremshebels 20 geöffnet bzw. geschlossen, während die Potentiometer P1 und P2 in Abhängigkeit von der Stellung des Handbremshebels ihren Widerstandswert verändern.

Die Potentiometer P1 und P2 werden parallel zueinander verstellt und geben ihre Ausgangssignale an den Elektronikschaltkreis 9 bzw. 10. Die Ausgänge der beiden Schalter des Schalterpaares S2 werden ebenfalls einem Eingang des Elektronikschaltkreises 9 bzw. 10 zugeführt. Dann werden den Signaleingängen der Elektronikschaltkreise 9 bzw. 10 noch Lastsignale von der Vorderachse (LVA) bzw. der Hinterachse (LHA) -erstellt durch die Lastsensoren 7 bzw. 8 - zugeführt.

Beide Ausgänge der Elektronik-Schaltkreise 9 und 10 werden je über einen Schalter des Schalterpaares S3 den elektrischen Steuereingängen des EP-Wandlers 14 zugeführt. Bei den zwischen den Elektronikschaltkreisen 9 und 10 und dem EP-Wandler 14 dargestellten Schaltern S3 handelt es sich um die im Handbremsventil 6 angeordneten Schalter S3, die hier lediglich zum besseren Verständnis also zweifach abgebildet sind.

Die Stromversorgung der Elektronik-Schaltkreise 9 und 10 erfolgt getrennt aus zwei voneinander unabhängigen Stromquellen 21 bzw. 22, auch SV1 bzw. SV2 gennant, die beispielsweise auf dem Fahrzeug mitgeführte, von der normalen Bordbatterie 23 unabhängige Batterien sind. Sie werden aus dem Fahrzeuggenerator 24 aufgeladen (ebenso wie die Bordbatterie 23), wobei zwischen den Fahrzeuggenerator 24 und die beiden Stromquellen 21 und 22 je eine Entkopplungsdiode D1 bzw. D2 zwischengeschaltet ist. Fällt also eine der beiden Stromquellen 21 oder 22 aus, so bleibt einer der beiden doppelt vorhandenen Elektronik-Schaltkreise 9 bzw. 10 funktionsfähig. In die Stromversorgungsleitung zwischen den Stormqauellen 21 bzw. 22 und den Elektronik-Schaltkreisen 9 bzw. 10 ist je ein elektrischer Schalter S4 zwischengeschaltet, der über das Zündschloß des Fahrzeuges betätigt wird. Zusätzlich kann eine weitere Betätigung mittels einer Überstromsicherung vorgesehen sein.

Zur Erfüllung des Sicherheitskonzeptes ist eine weitere Stromversorgung 25 vorgesehen, die hier als "sichere Stromversorgung" (Abkürzung SSV) bezeichnet wird. Diese sichere Stromversorgung 25 wird entweder gemeinsam aus den beiden Stromquellen 21 und 22 gespeist oder ist als weitere, unabhängige Batterie ausgebildet. Im ersteren Fall ist diese sichere Stromversorgung 25 beispielsweise durch vorgeschaltete, nicht gezeigte Entkoppelungsdioden auch dann funktionsfähg, wenn eine der beiden Stromversorgungen 21 oder 22 ausgefallen ist.

Diese sichere Stromversorgung 25 dient ausschließlich dazu, den EP-Wandler 14 bei nicht-betätigter Hilfs- und Feststellbremse in einem solchen Zustand zu halten, daß die Federspeicher-Bremszylinder 16 im Zustand "Bremse gelöst" gehalten werden, d.h. mit pneumatischem Druck beaufschlagt sind. Einlaß- und Auslaßventil des EP-Wandlers 14 sind damit erregt. Zur Sicherstellung dieser Funktion ist der Zwangsversorgungsschalter S1 vorgesehen, der bei nicht-betätigter Hilfsund Feststellbremse geschlossen ist und damit im Ruhezustand den EP-Wandler 14 zwangsweise mit Energie aus der sicheren Stromversorgung 25 versorgt. Dieser Zwangsversorgungsschalter S1 ist ebenfalls im Handbremsventil 6 angeordnet und lediglich der klaren Darstellung halber zweifach dargestellt. Durch gestrichelte Linien ist diese Zuordnung angedeutet, ebenso wie bei dem Schalterpaar S3.

Das Schalterpaar S3 ist normalerweise geschlossen und verbindet damit die Ausgänge der beiden Elektronik-Schaltkreise 9 und 10 mit Steuereingängen des EP-Wandlers 14. Erst in der Endstellung des Handbremshebels 20, wenn also die Feststellbremse betätigt werden soll, werden diese beiden Schalter S3 geöffnet, so daß der EP-Wandler 14 von jeglicher Energiezufuhr abgetrennt ist. Der Schalter S1 öffnet demgegenüber bereits bei anfänglichem Betätigen des Handbremshebels 20. Damit ist sichergestellt, daß die Feststellbremse sich nicht ungewollt lösen kann. Bei stromlosem EP-Wandler 14 ist nämlich das Einlaßventil mechanisch geschlossen, während das Auslaßventil mechanisch geöffnet ist, womit der Ausgangsdruck auf 0 liegt. Als zusätzliche Sicherheitsmaßnahme ist noch vorgesehen, daß der Querschnitt des Auslaßventiles des EP-Wandlers 14 größer ist als der des Einlaßventiles, so daß selbst bei ungewollter Drucknachspeisung der Druck am pneumatischen Ausgang des EP-Wandlers 14 auf einem niedrigen Druck nahe 0 liegt und damit dei Federspeicher-Bremszylinder 16 die Feststellbremse voll halten.

Die Stromversorgung der beiden Schalter des Schalterpaares S2 und der beiden Potentiometer P1 und P2 erfolgt zur Erfüllung des Sicherheitskonzeptes ebenfalls getrennt und zwar aus den beiden Stromversorgungen 21 und 22. Der eine Schalter des Schalterpaares S2 und eines der Potentiometer P1 oder P2, die jeweils einem Elektronik-Schaltkreis 9 oder 10 zugeordnet sind, werden aus der einen, diesem Elektronik-Schaltkreis zugeordneten Stromversorgung 21 oder 22 versorgt, während die jeweils andere Komponente aus der anderen Stromversorgung 22 oder 21 versorgt wird. Damit ist bei Ausfall einer der beiden Stromversorgungen 21 oder 22 noch eine einwandfreie Funktion bzw. eine

einwandfreie Signalerzeugung der Steuersignale des Handbremsventiles 6 sichergestellt.

Im Zusammenhang mit den Figuren 3A-3C wird die Erzeugung der Steuersignale des Handbremsventiles 6 erläutert. Die Diagramme der Figuren 3B und 3C zeigen entsprechende Ausgangssignale in Abhängigkeit vom Betätigungsweg W des Handbremshebels 20. In Ruhestellung des Handbremshebels 20 sind alle Schalter S1, S2 und S3 geschlossen. Die Potentiometer P1 und P2 stehen auf einem Anfangswert AW, der zu Überwachungswecken benötigt und in den Elektronikschaltkreisen 9 bzw. 10 augewertet wird. Die Kennlinie der Potentiometer ist linear mit dem Weg W, wie mit der Kurve E in Fig.3B dargestellt.

Solange der Handbremshebel 20 nicht betätigt ist, muß der EP-Wandler 14 über den Schalter S1 zwangsversorgt werden. Irgendwelche Steuersignale aus den Elektronik-Schaltkreisen 9 bzw. 10 dürfen hierbei den EP-Wandler 14 nicht beeinflussen. Sobald der Handbremshebel 20 nun geringfügig betätigt wird, öffnet der Schalter S1, so daß die Zwangsversorgung aufgehoben ist. Der EP-Wandler 14 wird jetzt über die noch geschlossenen Schalter S3 von den Elektronik-Schaltkreisen 9 und 10 angesteuert. Diese Ansteuerung erfolgt primär über die Ausgangssignale der Poteniometer, die in den Elektronik-Schaltkreisen 9 und 10 so umgewandelt werden, daß sich der gewünschte Druck in den Federspeicher-Bremszylindern 16 einstellt. Je höher die Bremskraftanforderung, desto niederiger muß der Druck sein und umgekehrt. Dies ist bei proportionalbetrieben Federspeicherbremszylindern bekannt.

Etwa in der Mitte des Betätigungsweges des Handbremshebels 20 öffnen die Schalter S2. Damit wird ein Überwachungssignal an die Elektronik-Schaltkreise 9 und 10 gegeben, welches für Fehlererkennung etc. verwendet werden kann.

Ist der Handbremshebel 20 soweit verschoben, daß die Stellung "Feststellbremse" erreicht ist, so öffnen die Schalter S3, so daß der EP-Wandler 14 vollständig von jeglicher Energiezufuhr bzw. von jeglichen elektrischen Steuersignalen abgetrennt ist. Evtl. noch auf den Ausgangleitungen der ELektronik-Schaltkreise 9 und 10 stehende Signale kommen damit nicht mehr zum EP-Wandler durch.

Die Feststellbremse ist damit absolut gesichert und evtl. Fehlfunktionen der Elektronik-Schaltkreise oder der Stromversorgung können nicht dazu führen, daß die Feststellbremse gelöst wird.

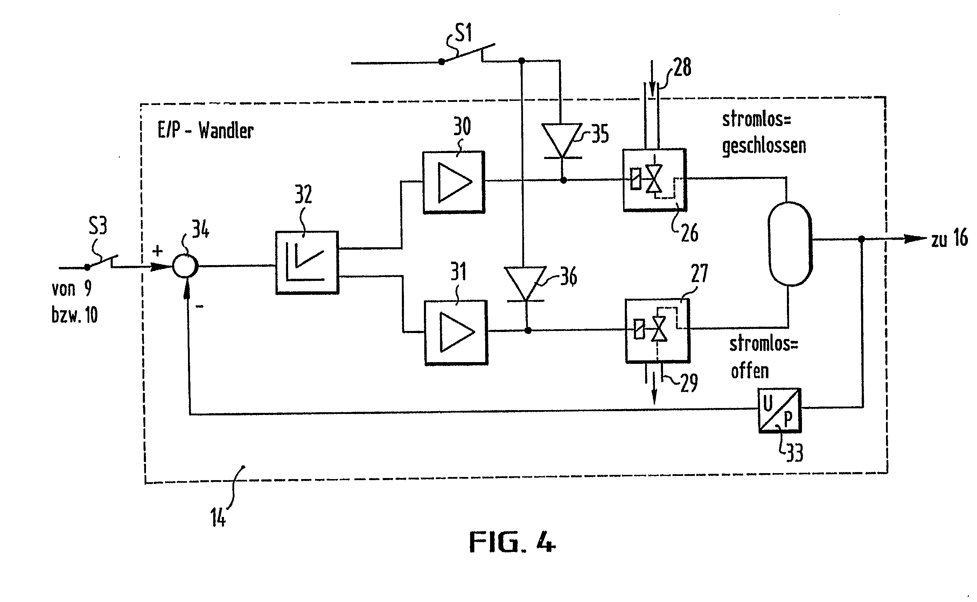

Fig.4 zeigt detaillierter den EP-Wandler 14 sowie dessen Ansteuerung. Der Aufbau des EP-Wandlers 14 ist im Prinzip aus der eingangs genannten DE-OS 28 11 345 bzw. DE-P-B1 0014369 bekannt. Er enthält ein Einlaßmagnetventil 26, das im nicht erregten bzw. stromlosen Zustand geschlossen ist, und ein Auslaßmagnetventil 27, das im nicht erregten bzw. stromlosen Zustand geöffnet ist. Das Einlaßventil 26 ist über eine Leitung 28 über das Rückschlagventil 35 (Fig.1) mit der Druckluftquelle verbunden. Das Auslaßventil 27 ist über eine Leitung 29 mit Atmosphäre verbunden. Der Querschnitt der Leitung 28 ist kleiner als der der Leitung 29, so daß bei ungewollter Nachspeisung, jedoch geöffnetem Auslaßventil 27 der Druck schnell auf nahezu 0 absinkt. Die Magnete der beiden Ventile 26 und 27 werden über je einen Verstärker 30 bzw. 31 angesteuert, wobei die Verstärker 30 und 31 aus einem Regler 32 angesteuert werden, der eine PID-Charakteristik hat. Der Ausgangsdruck des EP-Wandlers 14 wird in einem Druck-Spannungswandler 33 gemessen und als elektrisches Signal einem Vergleicher 34 zugeführt, wo dieses Signal mit einem Sollwertsignal aus einem der Elektronik-Schaltkreise 9 bzw. 10 verglichen wird. Das Ausgangssingal des Vergleichers 34 wird dem Eingang des Reglers 32 zugeführt.

Es ist zu erkennen, daß das Sollwertsignal von den Elektronikschaltkreisen 9 bzw. 10 über den Schalter S3 dem Vergleicher 34 zugeführt wird. Die Ausgänge beider Schalter 53 können über nicht gezeigte Entkoppelungsdioden zusammengefaßt werden, falls der Vergleicher 34 nur einen Eingang für die Schalter 53 aufweist.

Bei Zwangsversorgung des EP-Wandlers muß im Ruhezustand der volle Druck zu den Federspeicherbremszylindern geleitet werden. Damit muß also das Einlaßventil 26 geöffnet, d.h. erregt und das Auslaßventil 27 geschlossen, d.h. ebenfalls erregt sein. Diese Erregung der beiden Ventile 25 und 26 erfolgt über den Schalter S1, der über Entkoppelungsdioden 35 und 36 mit den Ansteuerleitungen für die Magnete der Ventile 26 und 27 verbunden ist. Anstelle eines einzigen Schalters S1 und zweier Entkoppelungsdioden 35 und 36 könnte man auch den Schalter S1 als Scahlterpaar auslegen, womit dann für die Ansteuerung bzw. Zwangsversorgung beider Ventile 26 und 27 je ein eigener Schalter vorgesehen wäre.

Das Handbremsventil 6 kann des weiteren derart ausgebildet sein, daß es mittels seines Handhebels 20 in eine sogenannte Prüf- oder Kontrollstellung einstellbar ist, in welcher ausschließlich die Feststellbremse des Triebfahrzeuge, nicht aber die Bremsanlage eines Anhängers bestätigt ist. In dieser Prüf- oder Kontrollstellung ist der EP-Wandler 13 (Fig.1) unbetätigt. Hierzu kann im Handbremsventil 6 ein weiterer, nicht dargestellter Schalter bzw. Schalterpaar vorgesehen sein, mittels welchem in der Prüf- oder Kontrollstellung die elektrische Leitungsverbindung bzw. -verbindungen zwischen den Elektronikschaltkreisen 9 bzw. 10 und dem EP-Wandler 13 unterbrechbar ist. Der Schalter bzw. das Schalterpaar kann dabei ähnlich dem Schalterpaar 53 angeordnet sein. In Abänderung hierzu ist es auch möglich, diese Funktion der Kennlinie der Potentiometer P1 und P2 aufzuprägen: Die Potentiometer P1 und P2 sind hierzu derart auszubilden, daß sie nach Einstellung der Parkstellung, in welcher die Feststellbremsanlage des Zugfahrzeuges und auch die Bremse eines gegebenenfalls vorhandenen Anhängers bzw. Aufliegers voll betätigt ist, in der Prüf- bzw. Konstrollstellung ein besonderes Spannungsniveau abgeben kann, durch welches eine nicht dargestellte Schalteinrichtung zum Abschalten des EP-Wandlers 13 angesteuert wird.

Sämtliche in den Patentansprüchen, der Beschreibung und/oder der Zeichnung aufgezeigten, technischen Einzelheiten können sowohl für sich als auch in beliebiger Kombination miteinander erfindungswesentlich sein.

## Patentansprüche

Hilfs- und Feststellbremse für Nutzfahrzeuge mit mindestens einem Federspeicher-Bremszylinder (16), dessen Druckluftbeaufschlagung mittels eines ausschließlich elektrische Organe (S1, S2, S3, P1, P2) betätigenden Handbremshebels (20) steuerbar ist, wobei stellungsabhängig vom Handbremshebel (20) die elektrischen Steuerorgane elektrische Signale an einen elektro-pneumatischen Wandler (14) abgeben, der vermittels eines Einlaß- und eines Auslaßventils (26, 27) die Druckluftbeaufschlagung des Federspeicher-Bremszylinders (16) bewirkt, und mit Elektronik-Schaltkreisen (9, 10) welche durch einen willkürlich verstellbaren Bremshebel ansteuerbar sind und elektro-pneumatische Wandler steuern, die die Druckluftbeaufschlagung von Bremszylindern überwachen, dadurch gekennzeichnet, daß die elektrischen Organe einen in der Ruhestellung des Handbremshebels (20) geschlossenen und zu Beginn einer Bewegung des Handbremshebels (20) aus dieser Ruhestellung sich öffnenden Zwangsversorgungsschalter (S1), der in eine Zwangs-Stromversorgungsleitung von einer unabhängigen Stromversorgung (25) zum elektropneumatischen Wandler (14) eingeordnet ist, und weitere, in der Ruhestellung und in Hilfsbremsstellungen des Handbremshebels (20) geschlossene Schalter (S3) in Anschlußleitungen des elektropneumatischen Wandlers (14) an die Elektronik-Schaltkreise (9,10) aufweisen, daß im stromlosen Zustand des elektro-pneumatischen Wandlers (14) das Einlaßventil (26) geschlossen und das Auslaßventil (27) geöffnet ist, und daß das Einlaßventil (26) einen kleineren Durchströmungsquerschnitt als das Auslaßventil (27) aufweist.

## Claims

Auxiliary and parking brake for utility vehicles having at least one spring-loaded brake cylinder (16), the action of compressed air upon which is controllable by means of a hand brake lever (20) actuating exclusively electric elements (S1, S2, S3, P1, P2), where, depending upon the position of the hand brake lever (20), the electric control elements emit electric signals to an electro-pneumatic transducer (14) which, by means of an inlet and an outlet valve (26, 27), effects the compressed air action upon the springloaded brake cylinder (16), and having electronic switching circuits (9, 10) which can be activated by means of an arbitrarily adjustable brake lever and which control electro-pneumatic transducers which monitor the compressed air action upon brake cylinders, characterised in that the electric elements have a forced supply switch (S1), which is closed in the rest position of the hand brake lever (20) and is opened when the hand brake lever (20) begins to move out of this rest position and which is arranged in a forced current supply line leading from an independent current supply (25) to the electro-pneumatic transducer (14), and further switches (S3), which are closed in the rest position and in auxiliary brake positions of the hand brake lever (20), in connection lines of the electropneumatic transducer (14) leading to the electronic switching circuits (9, 10), in that in the currentless state of the electro-pneumatic transducer (14) the inlet valve (26) is closed and the outlet valve (27) is opened and in that the inlet valve (26) has a smaller throughflow cross section than the outlet valve (27).

## Revendications

Frein de secours et de stationnement pour des véhicules utilitaires avec au moins un cylindre de frein à ressort-accumulateur (16) dont la charge en air comprimé est susceptible d'être contrôlée à l'aide d'un levier de frein à main (20) actionnant exclusivement des organes électriques (S1, S2, S3, P1, P2), lesdits organes électriques émettant, en fonction de la position du levier de frein à main, des signaux électriques pour un transducteur électro-pneumatique (14) qui, par l'intermédiaire d'une soupape d'admission (26) et d'une soupape d'évacuation (27), provoque la charge en air comprimé du cylindre de frein à ressort-accumulateur, et avec des circuits électroniques de commutation (9, 10) qui sont susceptibles d'être commandés par un levier de frein déplaçable volontairement et commandant des transducteurs électro-pneumatiques qui contrôlent la charge en air comprimé de cylindres de frein, caractérisé par le fait que les organes électriques comportent un interrupteur d'alimentation automatique (S1) qui est fermé dans la position de repos du levier du frein à main (20), et qui s'ouvre au début d'un déplacement du levier de frein à main (20) à partir de cette position de repos, ledit interrupteur d'alimentation automatique (S1) étant disposé dans une ligne d'alimentation automatique du courant menant d'une alimentation indépendante en courant (25) au transducteur électro-pneumatique (14) ainsi que d'autres interrupteurs (S3) qui sont fermés dans la position de repos et dans des positions de freinage de secours du levier de frein à main (20) et qui sont disposés dans des conducteurs de liaison du transducteur électropneumatique (14) avec les circuits électroniques de commutation (9, 10), qui à l'état dépourvu de courant du transducteur électro-pneumatique (14), la soupape d'admission (26) est fermée et la soupape d'évacuation (27) est ouverte, et que la soupape d'admission (26) possède une section transversale de passage qui est plus petite que celle de la soupape d'évacuation (27).

**FIG. 1**

Eingabe

Elektronik

Pneumatik

E/P-Funktion

Anhänger-Steuerung

Lastsensor HA

Lastsensor VA

HB

FIG. 2

FIG. 3A

FIG. 3B

FIG. 3C

EP 0 207 275 B1

FIG. 4